(19) Europäisches Patentamt / European Patent Office / Office européen des brevets

(11) **EP 3 390 502 B1**

(12) **EUROPEAN PATENT SPECIFICATION**

(45) Date of publication and mention
of the grant of the patent:
**12.08.2020 Bulletin 2020/33**

(51) Int Cl.:
*C08J 5/12* *(2006.01)*     *C08J 7/02* *(2006.01)*
*C08J 7/06* *(2006.01)*

(21) Application number: **16822822.9**

(22) Date of filing: **08.12.2016**

(86) International application number:
**PCT/US2016/065491**

(87) International publication number:
**WO 2017/105978 (22.06.2017 Gazette 2017/25)**

(54) **METHOD FOR ADHERING WATER SOLUBLE POLYMER FILMS**

VERFAHREN ZUM VERKLEBEN VON WASSERLÖSLICHEN POLYMERFOLIEN

PROCÉDÉ DE COLLAGE DE FILMS POLYMÈRES SOLUBLES DANS L'EAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2015 US 201562269548 P**

(43) Date of publication of application:
**24.10.2018 Bulletin 2018/43**

(73) Proprietors:
• **Rohm and Haas Company
Philadelphia, PA 19106 (US)**
• **Dow Global Technologies LLC
Midland, MI 48674 (US)**

(72) Inventors:
• **KAO, Joseph
Philadelphia, PA 19426 (US)**
• **PRASAD, Vikram
Midland
MI 48667 (US)**
• **VIETZKE, Sarah J.
Midland
MI 48667 (US)**
• **KARIKARI, Afua Sarpong
Collegeville
PA 19426 (US)**
• **JIN, Xin
Philadelphia, PA 19426 (US)**

(74) Representative: **Houghton, Mark Phillip
Patent Outsourcing Limited
Corner House
1 King Street
Bakewell
Derbyshire DE45 1DZ (GB)**

(56) References cited:
**US-A1- 2003 036 494     US-A1- 2014 356 603
US-A1- 2015 053 345**

## Description

This invention relates to a method for adhering water-soluble polymer films.

Pouched detergent formulations are known, e.g., high-salt formulations in polyvinyl alcohol pouches. Typically, water-soluble polymer films are adhered to form pouches using sealing agents consisting of good solvents for the polymer systems which easily dissolve the polymers to create good sealing between two polymer films, e.g. water. WO2004/009335 discloses a sealing solution containing a mixture of polyols and alcohols. However, combinations of these materials often do not provide good bond strength between the films.

Further documents which may be useful to understand the context of the invention include US 2003/0036494, US 2014/356603, and US 2015/0053345. The problem solved by this invention is the need for improved methods for adhering water soluble polymer films.

## STATEMENT OF INVENTION

The present invention provides a method for adhering water soluble polymer films by applying to at least one of the films a solution comprising: (a) from 70 to 90 wt% water, (b) from 10 to 30 wt% isopropanol, and (c) 0 to 5 wt% metal salts;

wherein the water soluble polymer films are acrylic polymers;

wherein the acrylic polymers comprise:

50 to 90 wt% polymerized units of C1-10 alkyl (meth)acrylate monomers;
10 to 50 wt% polymerized units of C3-8 monoethylenically unsaturated carboxylic acid monomers; and

0 to 25 wt% polymerized units of C2-4 hydroxyalkyl (meth)acrylate monomers.

Additionally disclosed herein is a method for adhering water soluble polymer films by applying to at least one of the films a solution comprising: (a) from 5 to 60 wt% water, and (b) from 40 to 95 wt% propylene glycol.

## DETAILED DESCRIPTION

Percentages are weight percentages (wt%) and temperatures are in °C, unless specified otherwise. Operations were performed at room temperature (20-25 °C), unless specified otherwise. The term "(meth)acrylic" means methacrylic or acrylic.

"Glass transition temperature" or "$T_g$" refers to the temperature at or above which a glassy polymer will undergo segmental motion of the polymer chain. Glass transition temperatures of a polymer can be estimated by the Fox equation (Bulletin of the American Physical Society, 1 (3) Page 123 (1956)) as follows:

$$1/T_g = w_1/T_{g(1)} + w_2/T_{g(2)}$$

For a copolymer, $w_1$ and $w_2$ refer to the weight fraction of the two comonomers, and $T_{g(1)}$ and $T_{g(2)}$ refer to the glass transition temperatures of the two corresponding homopolymers made from the monomers. For polymers containing three or more monomers, additional terms are added ($w_n/T_{g(n)}$). The $T_{(g)}$ of a polymer can also be calculated by using appropriate values for the glass transition temperatures of homopolymers, which may be found, for example, in "Polymer Handbook," edited by J. Brandrup and E.H. Immergut, Interscience Publishers. The $T_g$ of a polymer can also be measured by various techniques, including, for example, differential scanning calorimetry ("DSC"). The values of $T_g$ reported herein are measured by DSC.

As used herein, Mw refers to the weight average molecular weight as measured in a conventional manner with gel permeation chromatography (GPC) and polyacrylic acid standards. GPC techniques are discussed in detail in Modem Size Exclusion Chromatography, W. W. Yau, J. J. Kirkland, D. D. Bly; Wiley-Interscience, 1979, and in A Guide to Materials Characterization and Chemical Analysis, J. P. Sibilia; VCH, 1988, p.81-84. Molecular weights are reported herein in units of Daltons.

Preferably, the polymer films are sealed to form a closed pouch, preferably one containing a cleaning formulation or a laundry detergent, preferably a laundry detergent. The polymer film is an acrylic polymer. An "acrylic polymer" is a polymer having at least 60 wt% acrylic monomers, preferably at least 70 wt%, preferably at least 80 wt%, preferably at least 90 wt%. Acrylic monomers include (meth)acrylic acids, their salts and their $C_1$-$C_{22}$ alkyl or hydroxyalkyl esters; crotonic acid, itaconic acid, fumaric acid, maleic acid, maleic anhydride, (meth)acrylamides, (meth)acrylonitrile and alkyl or hydroxyalkyl esters of crotonic acid, itaconic acid, fumaric acid or maleic acid. The acrylic polymer may also comprise other polymerized monomer residues including, e.g., non-ionic (meth)acrylate esters, cationic monomers, monounsaturated dicarboxylates, vinyl esters of $C_1$-$C_{22}$ alkyl carboxylic acids, vinyl amides (including, e.g., N-vinylpyrrolidone), sulfonated acrylic monomers, vinyl sulfonic acid, vinyl halides, phosphorus-containing monomers, heterocyclic monomers, styrene and methyl-substituted styrenes.

The acrylic polymer comprises from 50 to 90 wt% polymerized units of $C_1$-$C_{10}$ alkyl (meth)acrylate monomers; preferably at least 60 wt%, preferably at least 65 wt%; preferably no more than 85 wt%, preferably no more than 80 wt%. The acrylic polymer comprises from 10 to 50 wt% polymerized units of $C_3$-$C_8$ monoethylenically unsaturated carboxylic acid monomers; preferably at least 12 wt; preferably no more than 40 wt%, preferably no more than 35 wt%, preferably no more than 30 wt%, preferably no more than 25 wt%. Preferably, carboxylic acid monomers have one or two carboxylic acid groups, preferably one. Preferably, the $C_3$-$C_8$ monoethylenically unsaturated carboxylic acid monomers are (meth)acrylic acids. The acrylic polymer comprises from 0 to 25 wt% polymerized units of $C_2$-$C_4$ hydroxyalkyl (meth)acrylate monomers; preferably at least 5 wt%, preferably at least 10 wt%; preferably no more than 20 wt%.

Preferably, the acrylic polymer comprises from 10 to 35 wt% n-butyl acrylate, preferably from 10 to 30 wt%, preferably from 12 to 30 w%. Preferably, monoethylenically unsaturated carboxylic acid monomers are $C_3$-$C_6$ alkyl (meth)acrylate monomers, preferably $C_3$-$C_4$.

Preferably, the acrylic polymer comprises an ionic crosslinking agent. Suitable crosslinking agents include, for example, divalent cations, such as $Ca^{2+}$, $Mg^{2+}$, $Al^{3+}$, or $Zn^{2+}$. Preferred are $Ca^{2+}$ and $Zn^{2+}$, which may be provided, for example, by $CaCl_2$, ZnO, or soluble zinc complex (e.g., zinc ammonium bicarbonate). Preferably, the crosslinker, when present, is present in amount of at least 0.1 wt %, preferably at least 0.2 wt %, preferably at least 0.3 wt %; preferably no more than 5 wt %, preferably no more than 3 wt %, preferably no more than 1 wt %, based on the total weight of the water soluble film.

Preferably, the polymer film comprises a hard polymer with Tg from 60 to 130 °C and a soft polymer with Tg from -20 to 40 °C. Preferably, the hard polymer has Tg from 70 to 100 °C, preferably 75 to 85 °C. Preferably, the soft polymer has Tg from 5 to 35 °C, preferably 10 to 30 °C. Preferably, the soft polymer comprises from 5 to 25 wt% polymerized units of $C_2$-$C_4$ hydroxyalkyl (meth)acrylate monomers, preferably from 10 to 20 wt%. Preferably, the hard polymer comprises from 30 to 60 wt% polymerized units of methyl methacrylate, preferably from 40 to 55 wt%. Preferably, the hard polymer comprises from 20 to 50 wt% polymerized units of $C_1$-$C_{10}$ alkyl acrylate monomers, preferably from 25 to 45 wt%; preferably the $C_1$-$C_{10}$ alkyl acrylate monomers are selected from the group consisting of methyl acrylate, ethyl acrylate, butyl acrylate and 2-ethylhexyl acrylate. Preferably, in the soft polymer the $C_1$-$C_{10}$ alkyl (meth)acrylate monomers are selected from the group consisting of methyl acrylate, ethyl acrylate, butyl acrylate and 2-ethylhexyl acrylate.

Preferably, Mw of the hard polymer is from 40,000 to 120,000, preferably from 40,000 to 90,000. Preferably, Mw of the soft polymer is from 40,000 to 60,000, preferably from 40,000 to 50,000.

Preferably, the amount of polymerized units of multiethylenically unsaturated monomers in the acrylic polymer is no greater than 1 wt%, preferably no greater than 0.5 wt%, preferably no greater than 0.25 wt%, preferably no greater than 0.1 wt%, preferably no greater than 0.05 wt%; all percentages based on dry polymer.

The polymers may be prepared by conventional emulsion polymerization techniques well known in the art. Preferably, at least a portion of the carboxylic acid groups on the hard polymer or the soft polymer, or both the hard polymer and the soft polymer, are neutralized. The carboxylic acids may be neutralized by conventional techniques with at least one base. Preferred bases include, e.g., amines, alkali or alkaline earth metal hydroxides, ammonium hydroxide and combinations thereof. Suitable amine neutralizers include, for example, 2 amino-2-methyl-1,3-propanediol, 2-amino-2-methyl-1-propanol, N,N-dimethyl-2-amino-2-methyl-1-propanol, mono-isopropanolamine, triisopropanolamine, ethanolamine, triethanolamine and morpholine. Suitable alkali or alkaline earth metal hydroxides include, for example, sodium hydroxide and potassium hydroxide. Preferably, the neutralizer is selected from potassium hydroxide, sodium hydroxide, or mixtures thereof.

The amount of neutralizer added to the polymer is that amount needed to provide the desired level of neutralization. Preferably from 5 to 100 %, preferably from 10 to 100 %, preferably from 50 to 100 %, preferably from 75 to 100 %, preferably from 85 to 95%, based on molar equivalents, of the acid groups in the acrylic polymer blend are neutralized.

Preferably, the cation of the mono- and poly-valent metal salt is selected from the group consisting of alkali metal and alkaline earth metal cations and $Al^{+3}$; preferably $Ca^{+2}$, $Mg^{+2}$, $Zn^{2+}$, $Pd^{2+}$, $La^{3+}$. $Ti^{4+}$, $Ag^+$, $K^+$, $Li^+$ and $Na^+$; preferably $Ca^{+2}$, $Mg^{+2}$ and $Na^+$. Percentages of polyvalent metal salts are based on the weight of the salt. Preferably, the anion is chloride, sulfate, bromide, iodide, carbonate, nitrate or acetate.

The solution comprises: (a) from 70 to 90 wt% water, (b) from 10 to 30 wt% isopropanol, and (c) from 0 to 3 wt% mono- and poly-valent metal salts; preferably (a) from 70 to 90 wt% water, and (b) from 10 to 30 wt% isopropanol.

Preferably, the solution comprises: (a) from 8 to 55 wt% water, and (b) from 45 to 92 wt% propylene glycol; preferably (a) from 8 to 50 wt% water, and (b) from 50 to 92 wt% propylene glycol.

Preferably, the hard and soft polymers of the invention contain limited crystalline content (i.e., they are highly amorphous), preferably, the polymers are completely amorphous with no crystallizable content. Percent crystallinity may be determined using differential scanning calorimetry. Percent crystallinity may be calculated by normalizing the heat of fusion of each sample to the known heat of fusion of a 100 % crystalline reference standard. Preferably, the percent crystallinity of the hard and soft polymers is 5.0 percent or less, more preferably 1.0 percent or less. Further preferably, the percent crystallinity is zero.

Preferably, the water soluble films of the invention contain a plasticizer. The plasticizer may be hydrophilic or hydrophobic, although hydrophilic plasticizers may result in a slight increase in overall film disintegration time. Preferably, a mixture of hydrophobic and hydrophilic plasticizers is used. Such mixtures are believed to provide the right balance of improved film formation and fast film break and disintegration. Examples of suitable hydrophobic plasticizers include benzoate esters, such as $C_9$-$C_{11}$ branched alkyl esters of benzoic acid, and dibenzoate capped diethylene glycol. Examples of suitable hydrophilic plasticizers include glycerol, sorbitol, propylene glycol, polyols, and polyethylene glycol (e.g., PEG200 or PEG400). Preferably, the plasticizer is present in the water soluble film in an amount ranging from 1 to 30 wt %, preferably from 1 to 20 wt %, based on the total weight of the water soluble film.

The water soluble films of the invention may contain other optional ingredients including, but not limited to, tackifiers (e.g., rosin esters), crosslinkers (e.g., $CaCl_2$, ZnO), fillers (e.g., zinc stearate, colloidal silica particles, also referred to as silica sols herein, which can be produced from different raw materials, for example from precipitated silica, micro silica (silica fume), pyrogenic silica (fumed silica) or silica gels, and they may be silanised), or coalescents (e.g., dipropylene glycol methyl ether, a film forming aid).

Preferably, the pouch contains a detergent composition. Preferably, the detergent composition comprises at least 17 wt% surfactants, preferably at least 20 wt%, preferably at least 23 wt%, preferably at least 26 wt%; preferably no more than 40 wt%, preferably no more than 35 wt%, preferably no more than 32 wt%. Preferably, the detergent comprises at least 40 wt% water, preferably at least 45 wt%, preferably at least 50 wt%, preferably at least 52 wt%; preferably no more than 75 wt%, preferably no more than 70 wt%, preferably no more than 65 wt%.

Preferably, the detergent composition comprises at least 4 wt% of salts; preferably at least 5 wt%, preferably at least 7 wt%, preferably at least 9 wt%; preferably no more than 20 wt%, preferably no more than 17 wt%, preferably no more than 15 wt%, preferably no more than 13 wt%. The amount of salts does not include any anionic or cationic surfactants present in the detergent. Preferably, salts have no more than ten carbon atoms, preferably no more than six carbon atoms, preferably no more than three carbon atoms. Preferably, salts are selected from the group consisting of chlorides, citrates, phosphates, sulfates, carbonates, metasilicates and aluminosilicates. Preferably, the cations of the salts are alkali metal ions or ammonium ions. Preferably, the detergent comprises a salt which is selected from the group consisting of sodium chloride, ammonium chloride and ammonium sulfate; preferably sodium chloride or ammonium chloride.

The surfactant(s) may be cationic, anionic, nonionic, fatty acid metal salt, zwitterionic or betaine surfactants. Preferably, the formulation comprises at least one anionic surfactant, preferably at least two. Preferably, nonionic surfactants have an alkyl group having at least eight carbon atoms and at least five polymerized ethylene oxide or propylene oxide residues. Preferably, nonionic surfactants have at least five polymerized ethylene oxide residues, preferably at least six, preferably at least seven,; preferably no more than twelve, preferably no more than eleven, preferably no more than ten. Preferably, the detergent composition comprises at least 5 wt% linear alcohol ethoxylates, preferably at least 6 wt%, preferably at least 8 wt%; preferably no more than 15 wt%, preferably no more than 13 wt%, preferably no more than 11 wt%. Preferably, a linear alcohol ethoxylate has a $C_8$-$C_{18}$ alkyl group, preferably $C_{10}$-$C_{16}$, preferably $C_{12}$-$C_{15}$. Preferably, a linear alcohol ethoxylate contains from six to twelve polymerized units of ethylene oxide, preferably from seven to ten. Preferably, anionic surfactants have an alkyl group having at least ten carbon atoms and an anionic group, preferably selected from sulfonates and sulfates. Anionic surfactants also may have polymerized residues of ethylene oxide, and/or may have aromatic rings, e.g., linear alkylbenzene sulfonates. Some anionic surfactants are fatty acid alkali metal salts. Preferably, the detergent composition comprises no more than 5 wt% linear alkylbenzene sulfonates, preferably no more than 3 wt%, preferably no more than 1 wt%. Preferably, alkylbenzene sulfonates have a $C_{10}$-$C_{14}$ alkyl group. Preferably, the detergent composition comprises at least 2 wt% alkyl sulfates, preferably at least 3 wt%, preferably at least 4 wt%. Preferably, the detergent composition comprises no more than 12 wt% alkyl sulfates, preferably no more than 10 wt%, preferably no more than 8 wt%. Preferably, an alkyl sulfate contains from one to five polymerized ethylene oxide units per molecule. Preferably, the detergent composition comprises at least 10 wt% linear alkyl sulfonate, preferably at least 13%, preferably at least 16%. Preferably, the composition comprises no more than 25 wt% linear alkyl sulfonates, preferably no more than 22 wt%.

Preferably, the pH of the detergent composition is from 4 to 11, preferably from 4.5 to 10, preferably from 4.5 to 9. Suitable bases to adjust the pH of the formulation include mineral bases such as sodium hydroxide and potassium hydroxide; ammonium hydroxide; and organic bases such as mono-, di- or tri-ethanolamine; or 2-dimethylamino-2-methyl-1-propanol (DMAMP). Mixtures of bases may be used. Suitable acids to adjust the pH of the aqueous medium include mineral acid such as hydrochloric acid, phosphorus acid, and sulfuric acid; and organic acids such as acetic acid. Mixtures of acids may be used. The formulation may be adjusted to a higher pH with base and then back titrated to the ranges described above with acid.

## EXAMPLES

### Abbreviations:

| | |
|---|---|
| BA | n-butyl acrylate |
| EA | ethyl acrylate |
| EHA | 2-ethylhexyl acrylate |
| HEMA | 2-hydroxyethyl methacrylate |
| MAA | methacrylic acid |
| MMA | methyl methacrylate |

### Examples 1-2: Sealing Solutions Containing ≥40wt% Water, ≤60wt% Isopropyl Alcohol (IPA), and <2wt% Metal Salt

Two sealing solutions with the compositions shown in Table 1 were prepared by mixing desired amounts of water, isopropyl alcohol, and metal salt ($CaCl_2$) together in glass vials. The solutions were stirred on a magnetic stir plate for 10 minutes and sonicated for 30 minutes before use. The -100 $\mu$m water-soluble films were prepared from casting a formulation containing a blend of acrylic polymers with specified glass transition temperatures and other additives by draw-down coating (Table 2). The films exhibit various desirable properties, including stability in high ionic strength aqueous solutions, and the ability to readily dissolve when the ionic strength is reduced. The seal strength of each sealing solution was then characterized by measuring the prepared specimens using INSTRON tensile test following the methods specified in ASTM F88 (Technique A). Specifically, the sealing solution was applied to a water-soluble film with a size of 1" x 0.5" (2.54 x 1.27 cm) using a cotton swab. The other film of the same size was place on the film with the applied sealing solution and sandwiched between two aluminum plates in a compression molding machine at a force of 5000 psi (34.5 MPa) for 1 minute. Two measurements were attempted for each specimen and the maximum load values during the tests were reported and tabulated in Table 3. The results demonstrate that the sealing solutions containing ≥50wt% Water, ≤50wt% IPA, and ≤2wt% $CaCl_2$ have seal strengths >6N, larger than that shown in the comparative examples.

**Table 1. Compositions of the sealing solutions and the sealing conditions.**

| Example | Sealing Solution Composition | | | Sealing Condition | |
|---|---|---|---|---|---|
| | IPA, wt% | Water, wt% | $CaCl_2$ wt% | Force | Time |
| 1 | 20 | 80 | 0 | 5000 psi | 1 minute |
| 2 | 20 | 80 | 0.5 | 5000 psi | 1 minute |

**Table 2. Compositions of the ACUDYNE™-based water soluble films.**

| Material | wt% |
|---|---|
| Acrylic polymer 1/30%<br>Acrylic polymer 2/<0.35% Zn | 16.47% |
| Glycerol | 0.69% |
| Isodecyl Benzoate | 0.85% |
| Amorphous Fumed Silica | 1.96% |
| Rosin ester | 0.86% |
| Alkoxylated Alcohol | 0.10% |
| Water | 79.08% |
| wt% polymer in Table 2 is on a solids basis for the entire weight of the film<br>Polymer 1 (wt% monomers): BA 20/EA 50/HEMA 15/MAA 15 (Tg=14°C), 40-44 % solids; Mw=45,000<br>Polymer 2 (wt% monomers): BA 25/MMA 47/EHA 10/MAA 18 (Tg=81°C), 40-44 % solids; Mw=90,000 | |

### Table 3. Seal strengths of the sealing solutions.

| Example | Sealing Solution Composition | | | Seal strength | | |
|---------|---------|-----------|-----------|-----------------|-----------------|---------|
| | IPA, wt% | Water, wt% | CaCl$_2$ wt% | 1$^{st}$ Measurement | 2$^{nd}$ Measurement | Average |
| 1 | 20 | 80 | 0 | 13.10 N | 11.42 N | **12.26 N** |
| 2 | 20 | 80 | 0.5 | 11.47 N | 10.59 N | **11.03 N** |

### Examples 3-5: Sealing Solutions Containing Water and Propylene Glycol (PG)

Two sealing solutions with the compositions shown in Table 4 were prepared by mixing the solvents together in glass vials. The solutions were stirred on a magnetic stir plate for 10 minutes and sonicated for 30 minutes before use. -100 μm thick films containing the water-soluble coating formulation in Table 2 were prepared using the methods described in Example 1. The prepared films were sealed between two aluminum plates in a compression molding machine at a force of 5000 psi for 1 minute. The seal strengths of the sealing solutions were characterized to be >11N using the method specified in ASTM F88.

### Table 4. Seal strengths of the sealing solutions.

| Example | Sealing Solution Composition | | | Seal strength | | |
|---------|---------|-----------|-----------|-----------------|-----------------|---------|
| | PG, wt% | Water, wt% | CaCl$_2$, wt% | 1$^{st}$ Measurement | 2$^{nd}$ Measurement | Average |
| 3 | 50 | 50 | 0 | 12.10 N | 11.83 N | **11.97 N** |
| 4 | 90 | 10 | 0 | 13.47 N | 12.30 N | **12.89 N** |
| 5 | 90 | 10 | 0.5 | 15.60 N | 12.30 N | **13.95 N** |

### Examples 6-8: Effect of Sealing Force and Time

The sealing solution shown in Example 1 was used to seal the same water-soluble films under different conditions (Table 5). By decreasing the sealing force to 2000lbs, the average seal strength increased from 12.26 to 14.30 N. Increasing the sealing force or time decreased the seal strength slightly but the values are still similar to that of the water-sealed poly vinyl alcohol films/pouches. Combining >1000 lbs sealing force and >1 minute sealing time yields the best condition to seal water-soluble films.

### Table 5. Seal strength under different sealing conditions.

| Example | Sealing Solution | Sealing Condition | | Seal strength | | |
|---------|-----------------|--------|-----------|-----------------|-----------------|---------|
| | | Force, N | Time, min | 1$^{st}$ Measurement | 2$^{nd}$ Measurement | Average |
| 6 | | 8900 | 1 | 15.54 N | 13.06 N | **14.30 N** |
| 7 | 80wt% Water + 20wt% IPA | 8900 | 5 | 9.83 N | 9.74 N | **9.79 N** |
| 8 | | 44500 | 1 | 9.84 N | 11.34 N | **10.59 N** |

### Example 9: Pouching

To test the applicability of the sealing solution in the examples, a detergent pouch was prepared using the film formulation in Table 2 and the sealing solution in Example 1 (Figure 1). The water-soluble polymer films were deformed using vacuum in a plastic prototype. The sealing solution was applied to three edges and the two films were sealed at 5000 psi (34.5 MPa) for 1 minute. Next, ~13g of the detergent formulation (Table 6) was added into the pouch. Lastly, the pouch was sealed using the sealing solution at 5000 psi (34.5 MPa) for 1 minute. The detergent pouch was left on the lab bench in ambient condition and it remained stable with no detergent leakage over 1 month.

**Table 6. Composition of the detergent formulation used for pouching.**

|  | Composition wt % |
|---|---|
| Water | 53 |
| Alpha Step PC 48 | 20 |
| NaCl | 10 |
| Biosoft N25-7 | 10 |
| Steol CS 270 | 7 |

## Comparative Examples 1-2: Heat Sealing

The water-soluble coating formulation shown in Example 1 was used to prepare two heat-sealed specimens. An 8" (20.3 cm) American International Electric AIE-200 Impulse Heat Sealing Machine was used to seal the films. The average seal strength of the heat-sealed specimens was characterized to be <4 N (Table 7), which is much lower than those presented in Examples 1-8.

**Table 7. Seal strength of the heat-sealed water-soluble films.**

| Comparative Example | Heat Sealing Condition | | Seal strength | | |
|---|---|---|---|---|---|
|  | Setting | Holding Time | 1st Measurement | 2nd Measurement | Average |
| 1 | 4 | 5s | 1.32 N | 1.20 N | **1.26 N** |
| 2 | 5 | 5s | 3.94 N | 3.50 N | **3.72 N** |

## Comparative Example 3: Sealing Solution Containing 100wt% Water

The water-soluble ACUDYNE™-based films shown in Example 1 were sealed by water and the average seal strength of the specimens was characterized to be ~1.35 N (Table 8), which is much lower than those presented in Examples 1-8.

**Table 8. Seal strength of the water-sealed water-soluble films.**

| Comparative Example | Sealing Solution Composition | | Seal strength | | |
|---|---|---|---|---|---|
|  | IPA, wt% | Water, wt% | 1st Measurement | 2nd Measurement | Average |
| 3 | 0 | 100 | 1.27 N | 1.43 N | **1.35 N** |

## Claims

1. A method for adhering water soluble polymer films by applying to at least one of the films a solution comprising: (a) 70 to 90 wt% water, (b) 10 to 30 wt% isopropanol, and (c) 0 to 5 wt% polyvalent metal salts;
   wherein the water soluble polymer films are acrylic polymers;
   wherein the acrylic polymers comprise:

   50 to 90 wt% polymerized units of $C_{1-10}$ alkyl (meth)acrylate monomers;
   10 to 50 wt% polymerized units of $C_{3-8}$ monoethylenically unsaturated carboxylic acid monomers; and
   0 to 25 wt% polymerized units of $C_{2-4}$ hydroxyalkyl (meth)acrylate monomers.

2. The method of claim 1 in which the acrylic polymers comprise from 0.1 to 3 wt% of an ionic crosslinking agent which is a divalent cation.

## Patentansprüche

1. Ein Verfahren zum Verkleben von wasserlöslichen Polymerfilmen durch Auftragen auf mindestens einen der Filme einer Lösung, die Folgendes beinhaltet: (a) zu 70 bis 90 Gew.-% Wasser, (b) zu 10 bis 30 Gew.-% Isopropanol und (c) zu 0 bis 5 Gew.-% polyvalente Metallsalze;
wobei die wasserlöslichen Polymerfilme Acrylpolymere sind;
wobei die Acrylpolymere Folgendes beinhalten:

zu 50 bis 90 Gew.-% polymerisierte Einheiten von $C_{1-10}$-Alkyl(meth)acrylatmonomeren;
zu 10 bis 50 Gew.-% polymerisierte Einheiten von monoethylenisch ungesättigten $C_{3-8}$-Carbonsäuremonomeren; und
zu 0 bis 25 Gew.-% polymerisierte Einheiten von $C_{2-4}$-Hydroxyalkyl(meth)acrylatmonomeren.

2. Verfahren gemäß Anspruch 1, wobei die Acrylpolymere zu 0,1 bis 3 Gew.-% ein ionisches Vernetzungsmittel beinhalten, das ein divalentes Kation ist.

**Revendications**

1. Un procédé pour le collage de films polymères solubles dans l'eau par application sur au moins un des films d'une solution comprenant : (a) 70 à 90 % en poids d'eau, (b) 10 à 30 % en poids d'isopropanol, et (c) 0 à 5 % en poids de sels de métaux polyvalents ;
où les films polymères solubles dans l'eau sont des polymères acryliques ;
où les polymères acryliques comprennent :

50 à 90 % en poids d'unités polymérisées de monomères de (méth)acrylate d'alkyle en $C_{1-10}$ ;
10 à 50 % en poids d'unités polymérisées de monomères d'acide carboxylique monoéthyléniquement insaturés en $C_{3-8}$ ; et
0 à 25 % en poids d'unités polymérisées de monomères de (méth)acrylate d'hydroxyalkyle en $C_{2-4}$.

2. Le procédé de la revendication 1 dans lequel les polymères acryliques comprennent de 0,1 à 3 % en poids d'un agent de réticulation ionique qui est un cation divalent.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004009335 A
- US 20030036494 A
- US 2014356603 A
- US 20150053345 A

**Non-patent literature cited in the description**

- *Bulletin of the American Physical Society,* 1956, vol. 1 (3), 123
- Polymer Handbook. Interscience Publishers
- **W. W. YAU ; J. J. KIRKLAND ; D. D. BLY.** Modem Size Exclusion Chromatography. Wiley-Interscience, 1979
- **J. P. SIBILIA.** A Guide to Materials Characterization and Chemical Analysis. VCH, 1988, 81-84